Europäisches Patentamt

European Patent Office

Office européen des brevets

(19)

(11) Publication number: **0 261 082**
A2

(12)

# EUROPEAN PATENT APPLICATION

(21) Application number: **87830263.7**

(22) Date of filing: **08.07.87**

(51) Int. Cl.⁴: **F 16 J 15/34, F 04 D 29/10**

(30) Priority: **18.07.86 IT 56686U**

(43) Date of publication of application: **23.03.88**
**Bulletin 88/12**

(84) Designated Contracting States: **AT BE CH DE ES FR GB GR LI LU NL SE**

(71) Applicant: **MECCANOTECNICA UMBRA - S.r.l., Via Agnelli, 7, I-06042 Campello Sul Clitunno (PG) (IT)**

(72) Inventor: **Ginobri, Fulvio, Bovara di Trevi (PG) (IT)**

(74) Representative: **Baldi, Claudio, Piazza Ghislieri, 3, I-60035 Jesi (Ancona) (IT)**

(54) **Mechanical seal with a reduced axial length for hydraulic pumps.**

(57) This invention concerns a seal with slip track and counter-track, where the axial dimension is reduced compared to conventional seals of the same type, by fitting inside its container sleeve, a cylindrical, helical spring, whose turns are at a certain distance from the central collar of that container, onto which said spring is threaded, so that between them there is thus created a space where an OR ring is to be housed within a special basin shaped metal ring; this OR ring is to be held against a collar which projects outwards from a carbon ring acting as the slip track of the seal, said collar being also designed to fit in the aforesaid space.

0261082

- 1 -

<u>Seal with slip track and counter-track for centrifugal and rotary hydraulic pumps, characterized by a reduced axial dimension.</u>

This patent application for an industrial utility model concerns a seal with slip track and counter-track for centrifugal and rotary hydraulic pumps, characterized by a reduced axial dimension.

At present, in the technology of this sector, there are two different types of seal for centrifugal and rotary hydraulic pumps, which are fitted with an internal sealing OR ring, housed inside the pump cover at the outlet of the impeller shaft and against which the hub of the impeller shall rest.

The most recent types of these seals consist of a container sleeve including a cylindrical collar at its centre, which permits the passage of the pump shaft and onto which are threaded: a helical spring, a metal ring which relieves the axial thrust of the spring, an OR ring which ensures the internal seal and a carbon ring; all these elements are designed to be tightly held within the container by means of a closing ring nut.

Based on this general structure, at present there are two different types of seal being produced, which differ in their sealing capacity in regard to the impeller hub.

In fact, in certain versions of the seal, the sealing must be assured between the head (the carbon ring) and the impeller hub which, for this purpose, must be heat-treated and then lapped to avoid any leaking of liquid between the two surfaces in contact.

In other versions, however, such seals include a slip track and countertrack which produce the sealing autonomously, so that even an impeller with an unlapped hub can rest against the head of these seals.

It is evident that it would be preferable to be able always to use this second type of seal given that, thanks to it, savings in time and money can be effected regarding the lapping of the hubs which could otherwise be essential, and for the same reason, it would actually be advantageous to re place the first type of seal (that which makes the seal in contact with the lapped impeller hub) with these seals provided with an autonomous sealing capacity.

Up to now, however, while it was possible to use ex novo seals with slip track and counter-track it was neither easy to replace a seal designed to co-operate with a lapped impeller hub with one which has an autonomous sealing capacity, nor to fix the latter type of seal where sealing is assured by the contact of the seal with the lapped impeller hub.

The reason for these limits is to be found in the differing axial dimensions of the two distinct types of seal. In fact, the type with slip track and counter-track has a greater axial dimension, which prevents their interchangeability. The main object of the present invention is the possibility of interchanging different seals - a result which can only be obtained by reducing the axial dimensions of the seals with slip track and counter-track, to bring them to the same dimensional levels as those of the seals which lack the above mentioned components.

To arrive at this objective in the seal according to the invention, it has been decided to intervene on the conformation of the helical spring, the small metal ring and the carbon ring which lies above them, all of which are threaded on to the cylindrical collar of the container sleeve.

In the existing seals with a slip track and countertrack, the helical spring in fact has a cut-off conical form, so that its last turn, counting from the bottom of the container, is perimetrally very close to the above mentioned cylindrical collar on to which it is threaded, so that between that turn and the collar there is space only for the thin centering collar, facing towards the bottom of the container sleeve, of the flat metal ring which is designed to relieve the axial thrust of the spring and simultaneously provide support for the OR ring.

Furthermore, in this version of the seal, above the OR ring there is a carbon ring which acts as a slip track and is capable of holding the OR ring along its perimeter so that said OR ring is completely circumscribed by it.

In the seal with slip track and counter-track according to the invention, the helical spring is cylindrical, so that its last turn can remain at quite a distance from the cylindrical central collar of the container sleeve.

Thanks to this new provision, an OR ring can be provided between the spring and the collar and within the turns of the spring itself, said OR ring being fitted exactly within a basin shaped metal ring having an upper external rim wide enough to be able to rest perimetrally on the last turn of the spring.

As regards the abovementioned carbon ring, it must be said that it has been given a particular conformation so as to have a perimetral collar projecting downwards which will abut exactly on the OR ring and fit simultaneously into the space between the cylindrical collar and the turns of the spring.

It can be seen from the above, even if it is only set out summarily, how the positioning of the OR ring within the turns of the spring, together with the associated possibility of inserting the lower collar of the carbon ring, has made it possible to reduce the axial dimension of this type of seal with slip track and counter-track, so that it can be compared to seals lacking these components, with the result that now they are perfectly interchangeable.

For greater clarity, the description of the invention now continues with reference to the enclosed drawing, which is solely of illustrative value and certainly is not limitative, in which:

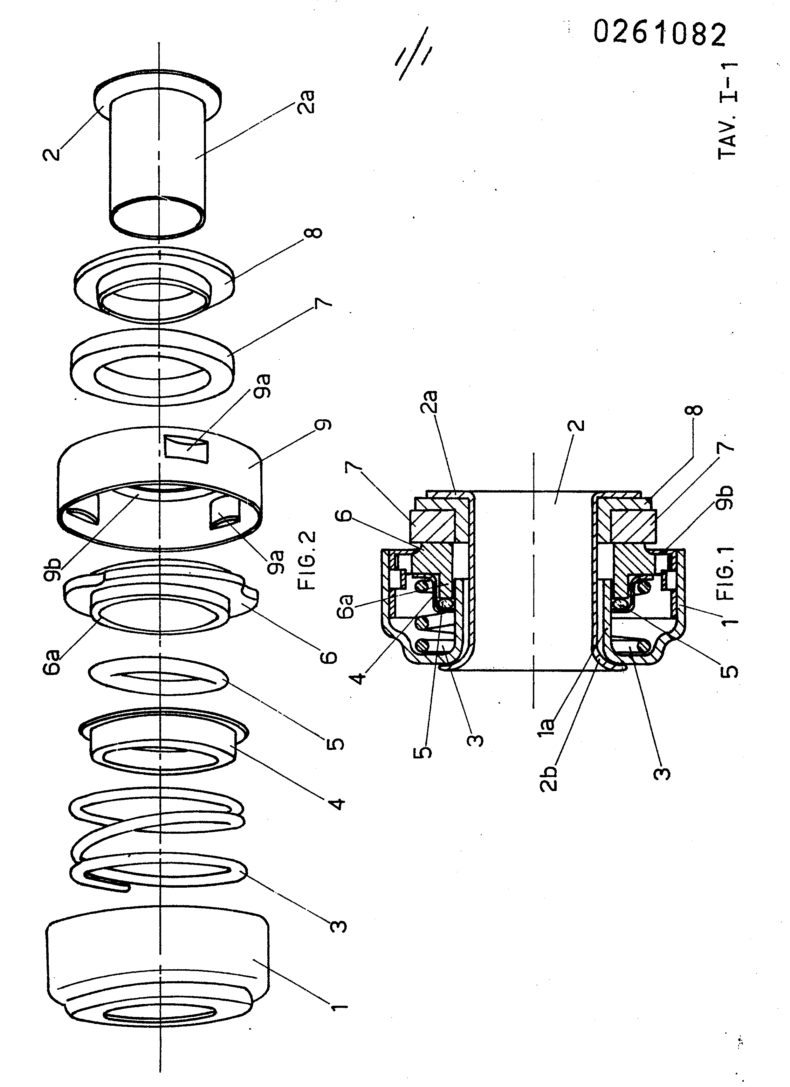

- fig. 1 is the section of the pressure seal according to the invention with a diametral plane;
- fig. 2 is an exploded drawing, showing in perspective each individual component of the seal separately.

With reference to the enclosed drawing, the seal according to the invention is made up of a container sleeve (1) including a cylindrical collar (1a) at its centre, which allows the passage of the pump shaft after positioning a metal tube (2), which presents an external flange (2a) at one of its ends, while at the other end there is a rim (2b) folded outwards.

The following components are threaded on to the inner collar (1a) in the given order: a cylindrical helical spring (3) and a basin shaped inner ring (4) with an externally projecting rim, designed to relieve the axial thrust of the spring (3); a sealing OR ring (5) which fits exactly inside the basin shaped ring, is also to be threaded on to the external surface of the collar (1a) of the container (1); against this OR ring (5) shall abut the raised collar (6a) of an annular carbon slip track (6) whose front side, however, is designed to rest on an annular slip counter-track (7) which is threaded on to the external surface of the metal tube (2) into which the ring shaped supporting plate (8), which actually constitutes the gasket, has been previously inserted.

It must be added that the expulsion of the slip track (6), subject to the axial thrust of the spring (3), is prevented by the closing ring nut (9) with such a diameter that it can fit exactly into the container (1) when pushed firmly in; the closing ring nut includes three little lugs (9a) projecting inwardly which connect with the matching notches cut into the perimeter of the slip track (6) with the aim of preventing any rotation.

To further this aim, the closing ring nut (9) presents a rim (9b) folded inwards, which couples to and restrains the slip track (6) which in fact presents, on its front side, a perimetral holding grip designed to connect with said rim (9b).

The counter-track (7) mounted on to its gasket (8) is held against the slip track (6) when the metal tube (2) which supports it, is threaded into the collar (1a) of the container (1) and subsequently folded at its edge (2b).

- 1 -

Claims

1) Seal with slip track and counter-track for centrifugal and rotary hydraulic pumps, of reduced axial dimension, including a container (1) which has a cylindrical inner collar (4), an OR ring (5) and a carbon slip track (6), all locked in place by a closing ring nut (9) which is forced into the container (1); this seal is characterized in that the helical spring is cylindrical in type and has been designed with a diameter such that a space will be left between its turns and the central collar (1a) of the container (1), so that it will be possible to insert the concave part of a basin shaped ring (4) upon whose outer rim the axial thrust of the spring (3) is to be relieved; the carbon slip track (6) has been designed so that it includes on its inner side a raised rim (6a) around the central hole, which is to be inserted into the basin shaped ring (4) until it squeezes against the OR ring (5) contained inside said basin shaped ring, and on its front side there is a perimetral holding grip designed to connect with the rim (9b) which is folded inwards and that is found on the closing ring nut (9), while perimetrally to it there are three equidistant notches which block any rotation by connecting up with the three analogous and corresponding small lugs which are present on the inner wall of the closing ring nut (9) for that precise purpose.

0261082

TAV. I-1

FIG.2

FIG.1